# EUROPEAN PATENT APPLICATION

(11) **EP 3 967 910 A1**
(43) Date of publication of application: **16.03.2022**
(21) Application number: 20801809.3
(22) Date of filing: 28.04.2020
(51) Int. Cl.: F16K 31/06

(54) **SOLENOID VALVE**

(30) Priority: 08.05.2019 JP 2019088205
(71) Applicant: Eagle Industry Co., Ltd., Minato-ku Tokyo 105-8587 (JP)
(72) Inventor: SHIOI Takashi, Tokyo 105-8587 (JP); IWANAGA Hiroyuki, Tokyo 105-8587 (JP); KASAGI Yoshinari, Tokyo 105-8587 (JP)
(74) Representative: WSL Patentanwälte Partnerschaft mbB
(86) International application number: PCT/JP2020/018108
(87) International publication number: WO 2020/226101

(57) **Abstract**

To provide a solenoid valve that is small in size and is highly accurate. There is provided a solenoid valve 1 in which a rod 5 is moved by a plunger 4 that is driven to come into contact with and separate from a stator 32 by electromagnetic force, to cause a valve body 22, which opens and closes a valve, to reciprocate. A recessed portion 4a is formed in the plunger 4, and an end portion 53 of the rod 5 disposed between the plunger 4 and the valve body 22 is fitted into the recessed portion 4a. Communication paths P1, P2, and P3 through which a space S3 inside the recessed portion 4a and a space S1 outside the plunger 4 communicate with each other are formed between the rod 5 and the recessed portion 4a.

## Description

### {TECHNICAL FIELD}

The present invention relates to, for example, a solenoid valve used for hydraulic control of a hydraulic circuit.

### {BACKGROUND ART}

A solenoid valve for hydraulic control in the related art includes a spool valve unit that includes a spool having a columnar shape and accommodated in a sleeve, and a solenoid unit that includes a solenoid case accommodating a solenoid molded body in which a stator, a plunger, and a coil are covered with resin, and drives the spool in an axial direction, and can be disposed between a pressure source such as a pump or an accumulator and a supply destination to drive the spool, thus to supply a fluid, of which the pressure or flow rate is regulated, to the supply destination.

For example, in a solenoid valve disclosed in Patent Citation 1, a recessed portion extending in an axial direction is formed in a spool side end portion of a plunger, and an end portion of a rod is fitted and connected to the recessed portion. When a coil is energized and excited, the plunger and the rod can be attracted to a stator to cause a spool to move in the axial direction, thus to switch communication states of various ports formed in a sleeve.

### {CITATION LIST}

### {Patent Literature}

Patent Citation 1: JP 2009-203991 A (page 6 and FIG. 1)

### {SUMMARY OF INVENTION}

### {Technical Problem}

However, in the solenoid valve of Patent Citation 1, the size can be reduced by increasing the volume of the plunger itself to cause magnetic fluxes to act efficiently, but when the end portion of the rod is fitted into the recessed portion of the plunger, air remains inside the recessed portion in a compressed state. Accordingly, not only there is a problem that due to a rise in temperature, the compressed air inside the recessed portion expands to cause the rod to move from the recessed portion in a pullout direction, but also there is a problem that when used in liquid, buoyancy is generated by the air remaining inside the recessed portion, so that a desired accuracy of the solenoid valve cannot be obtained.

The present invention has been made in light of such problems, and an object of the present invention is to provide a solenoid valve that is small in size and is highly accurate.

### {Solution to Problem}

In order to solve the foregoing problems, according to the present invention, there is provided a solenoid valve in which a rod is moved by a plunger that is driven to come into contact with and separate from a stator by electromagnetic force, to cause a valve body, which opens and closes a valve, to reciprocate. A recessed portion is formed in the plunger, and an end portion of the rod disposed between the plunger and the valve body is fitted into the recessed portion. A communication path through which a space inside the recessed portion and a space outside the plunger communicate with each other is formed between the rod and the recessed portion. According to the aforesaid feature of the present invention, since the space inside the recessed portion communicates with the space outside the plunger through the communication path, a fluid of an assembly atmosphere can be avoided from remaining between the recessed portion and the rod, and the accuracy of operation of the plunger can be improved while the size is reduced.

It may be preferable that the communication path is partitioned off by cutouts of the rod. According to this preferable configuration, an effective region of magnetic fluxes in the plunger can be formed in a well-balanced manner.

It may be preferable that the cutouts of the rod are be disposed at equal intervals in a circumferential direction. According to this preferable configuration, the fluid easily flows in and out from the recessed portion, and the fluid of the assembly atmosphere is unlikely to remain inside the recessed portion.

It may be preferable that a fitting side end portion of the rod is formed in a tapered shape. According to this preferable configuration, the rod is easily fitted into the recessed portion, and the fluid can smoothly move between the space between the recessed portion and the rod and the space outside the plunger.

It may be preferable that the rod has a flange portion which comes into contact with the plunger. According to this preferable configuration, when the large diameter portion comes into contact with an end surface of the plunger, the depth of fitting of the rod into the recessed portion can be determined.

It may be preferable that an edge portion of the recessed portion has a tapered surface inclined toward a center of the recessed portion. According to this preferable configuration, the rod is easily fitted into the recessed portion along the tapered surface.

It may be preferable that the communication path is partitioned off by the tapered surface of the recessed portion and a cutout of the rod. According to this preferable configuration, since the communication path is partitioned off by the cutout of the rod and the tapered surface of the plunger, the sizes of the cutout and the tapered surface can be reduced, and the strength of the rod and the plunger can be secured.

### {BRIEF DESCRIPTION OF DRAWINGS}

FIG. 1 is a perspective view illustrating a solenoid valve according to a first embodiment of the present invention.
FIG. 2 is cross-sectional view illustrating the solenoid valve according to the first embodiment. Incidentally, for convenience of explanation, a spool and a rod are illustrated in a side view.
FIG. 3A is a side view illustrating the structure of the rod in the first embodiment, and FIG. 3B is a view of a protruding portion of the rod as seen in an axial direction.
FIG. 4 is a view illustrating a modification example of the rod in the first embodiment.
FIG. 5 is a cross-sectional view illustrating a solenoid valve according to a second embodiment of the present invention. Incidentally, for convenience of explanation, a spool and a rod are illustrated in a side view.

### {DESCRIPTION OF EMBODIMENTS}

Modes for implementing a solenoid valve according to the present invention will be described below based on embodiments.

### {First embodiment}

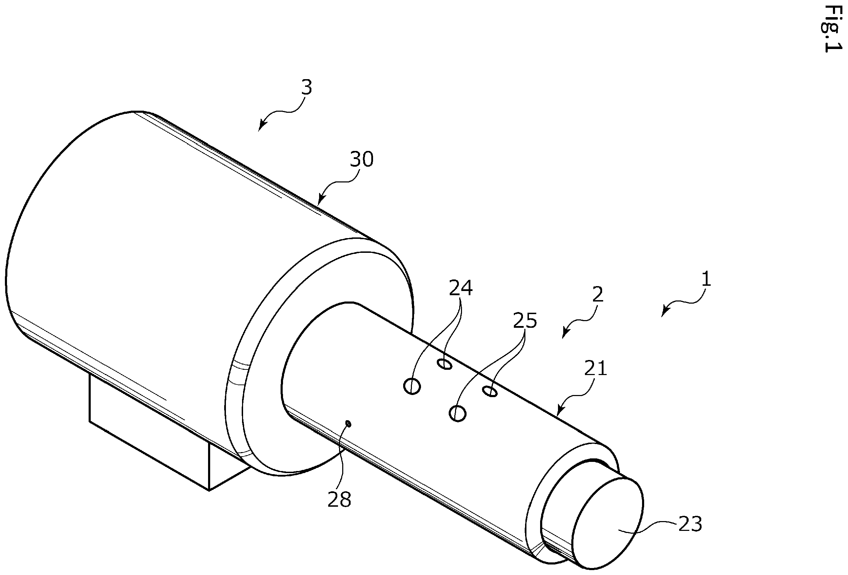

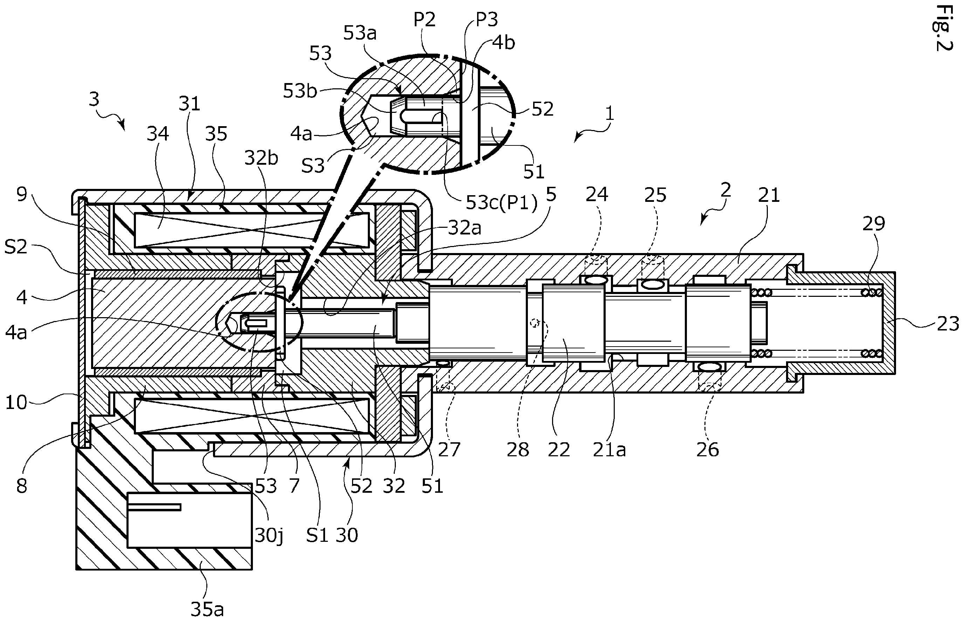

A solenoid valve according to a first embodiment of the present invention will be described with reference to FIGS. 1 to 3. Hereinafter, a description will be given based on the assumption that the right side of the drawing sheet of FIG. 2 is one end side in an axial direction of the solenoid valve and the left side of the drawing sheet of FIG. 2 is the other end side in the axial direction of the solenoid valve.

As illustrated in FIG. 1, a solenoid valve 1 of the present embodiment is a spool type solenoid valve, and is used in, for example, a hydraulically controlled apparatus such as an automatic transmission of a vehicle. Incidentally, the solenoid valve 1 is used as a so-called oil-immersed solenoid valve that is attached to a mounting hole of a valve housing on an apparatus side in a horizontal direction, and is immersed in a hydraulic oil which is a liquid in the valve housing.

As illustrated in FIGS. 1 and 2, the solenoid valve 1 is configured such that a valve unit 2 which regulates the flow rate of a fluid, namely, a control fluid such as a hydraulic oil is integrally attached to a solenoid unit 3. Incidentally, FIG. 2 illustrates an off state of the solenoid valve 1, in which a coil 34 of a solenoid molded body 31 is not energized.

First, the structure of the valve unit 2 will be described. As illustrated in FIGS. 1 and 2, the valve unit 2 includes a sleeve 21 provided with openings of various ports such as an input port 24, an output port 25, a discharge port 26, a drain port 27, and a feedback port 28 that are connected to flow paths provided in the mounting hole of the valve housing, a spool 22 as a valve body that is liquid-tightly accommodated in a through-hole 21a formed in the axial direction on an inner diameter side of the sleeve 21, a spring 29 that has a coil shape and biases the spool 22 to the other side in the axial direction, and a retainer 23 that holds the spring 29.

In the sleeve 21, the discharge port 26, the output port 25, the input port 24, the feedback port 28, and the drain port 27 are formed in order from the one end side in the axial direction toward the other end side in the axial direction. The spool 22 is reciprocatable in the axial direction, and the spool 22 is reciprocated in the axial direction, so that communication states of the various ports are changed to control the pressure or flow rate of the hydraulic oil. Incidentally, the sleeve 21, the spool 22, and the retainer 23 are made of a material such as aluminum, iron, stainless steel, or resin.

Next, the structure of the solenoid unit 3 will be described. As illustrated in FIG. 2, the solenoid unit 3 mainly includes a solenoid case 30 made of a metallic material such as iron having magnetic properties, the solenoid molded body 31 accommodated in the solenoid case 30, a stator 32 disposed inside the solenoid molded body 31, and a plunger 4 disposed so as to be movable in the axial direction to the other side in the axial direction of the stator 32.

The solenoid molded body 31 is formed by molding the coil 34 with a resin 35, and control current is supplied to the coil 34 from a connector of a connector portion 35a that extends to the outside from an opening portion 30j provided on an outer diameter side of the solenoid case 30. The solenoid molded body 31 is integrally formed on an outer diameter side of the stator 32. In addition, an opening is provided at the other end in the axial direction of the solenoid case 30, and a lid member 10 is fixed by caulking, so that the opening is closed.

The stator 32 is a tubular body having a through-hole 32a in a central portion thereof, the through-hole 32a penetrating therethrough in the axial direction, and is made of a metallic material such as iron having magnetic properties. A recessed portion 32b which is recessed to the one end side in the axial direction is formed at the other end in the axial direction of the stator 32, and the recessed portion 32b communicates with the through-hole 32a. In addition, the other end portion in the axial direction of the spool 22 is in contact with an end surface of the stator 32 on the one end side in the axial direction, so that the movement of the spool 22 to the other side in the axial direction is restricted.

In addition, a first tubular body 7 made of a non-magnetic material is provided on the other end side in the axial direction of the stator 32, a second tubular body 8 made of a magnetic material is provided on the other end side in the axial direction of the first tubular body 7, and a third tubular body 9 made of a magnetic material is provided over the first tubular body 7 and the second tubular body 8 inside the first tubular body 7 and the second tubular body 8. An inner peripheral surface of the third tubular body 9 is processed into a low frictional surface, and has high slidability with respect to the plunger 4.

The plunger 4 is made of a metallic material such as iron having magnetic properties to have a columnar shape, and is disposed so as to be slidable on the inner peripheral surface of the third tubular body 9. An outer peripheral surface of the plunger 4 and the inner peripheral surface of the third tubular body 9 are slightly separated from each other, and almost no fluid passes through the gap.

A space S1 as a space outside the plunger 4 is formed on one side in the axial direction of the plunger 4, and a space S2 is formed on the other side in the axial direction of the plunger 4. Specifically, the space S1 is partitioned off by the plunger 4, the through-hole 32a of the stator 32, the recessed portion 32b, and the spool 22, and the space S2 is partitioned off by the plunger 4, the second tubular body 8, and the lid member 10.

A recessed portion 4a which is recessed to the other end side in the axial direction is formed at one end in the axial direction of the plunger 4, and a protruding portion 53 as an end portion of a rod 5 on the other end side in the axial direction is fitted and fixed to the recessed portion 4a, the rod 5 being inserted into the through-hole 32a of the stator 32. A tapered surface 4b which is inclined toward a central portion of the recessed portion 4a is formed in an edge portion of the recessed portion 4a. In addition, a tip of the rod 5 on the one end side in the axial direction is in contact with an end surface of the spool 22 on the other end side in the axial direction. Namely, the rod 5 is disposed in the space S1. Incidentally, the tip of the rod 5 on the one end side in the axial direction may be fixed to the end surface of the spool 22 on the other end side in the axial direction. Further incidentally, the tip of the rod 5 on the one end side in the axial direction may not be in contact with the end surface of the spool 22 on the other end side in the axial direction.

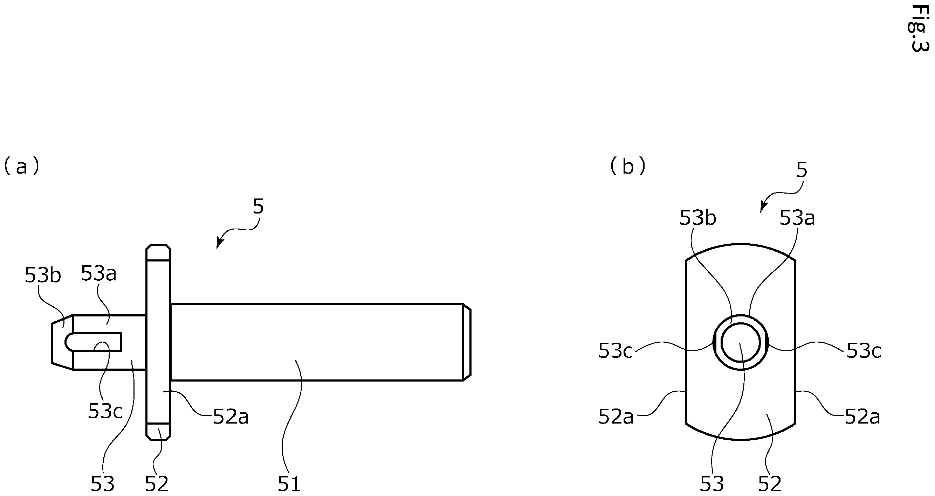

Next, the structure of the rod 5 will be described. As illustrated in FIGS. 2 and 3, the rod 5 is provided with a base portion 51 that has a columnar shape, is made of a non-magnetic material such as resin or rubber, and is inserted into the through-hole 32a of the stator 32, a flange portion 52 as a large diameter portion that projects from the other end portion in the axial direction of the base portion 51 to the outer diameter side, and the protruding portion 53 that has a small diameter and protrudes from an inner diameter portion of an end surface of the base portion 51 to the other side in the axial direction, the end surface being on the other end side in the axial direction.

A fitting side end portion 53b having a tapered surface inclined toward a central axis of the protruding portion 53 is formed in the other end portion in the axial direction of the protruding portion 53, so that the other end portion in the axial direction has a tapered shape. In addition, two cutouts 53c extending linearly in the axial direction are disposed at equal intervals on an outer periphery of the protruding portion 53 in a circumferential direction. Incidentally, in the cutout 53c, a bottom surface is formed in a flat surface shape, an end portion on the one end side in the axial direction is formed in an outer peripheral surface 53a of the protruding portion 53 at a position that is separated from an end surface of the flange portion 52 on the other end side in the axial direction to the other end side in the axial direction, and the other end portion in the axial direction is formed to cut out a part of the fitting side end portion 53b. In addition, both sides of a circular plate, which correspond to the cutouts 53c and 53c, are cut out, so that side surfaces 52a and 52a (refer to FIG. 3) having a linear shape are formed in the flange portion 52.

As illustrated in FIG. 2, the protruding portion 53 of the rod 5 is fitted and fixed to the recessed portion 4a of the plunger 4. Namely, the outer peripheral surface 53a of the protruding portion 53 and an inner peripheral surface of the recessed portion 4a of the plunger 4 are in press contact with each other. Since the other end portion in the axial direction of the protruding portion 53 is tapered due to the fitting side end portion 53b being formed, when the protruding portion 53 is fitted into the recessed portion 4a, the tapered surface of the fitting side end portion 53b is guided by the edge portion of the recessed portion 4a of the plunger 4, so that the protruding portion 53 is easily fitted into the recessed portion 4a.

In addition, when the protruding portion 53 is fitted into the recessed portion 4a by a predetermined length, the end surface of the flange portion 52, which has projected to the outer diameter side from the protruding portion 53, on the other end side in the axial direction comes into contact with an end surface of the plunger 4 on the one end side in the axial direction (particularly, refer to FIG. 2). As described above, since the end surface of the flange portion 52 on the other end side in the axial direction is in contact with the end surface of the plunger 4 on the one end side in the axial direction, the fitting of the rod 5 is restricted. Therefore, the depth of fitting of the rod 5 into the plunger 4 can be determined, and the rod 5 can be accurately fixed to the plunger 4. In addition, during production of the rod 5, since a rounded portion (not illustrated) which is formed in a continuous portion between the end surface of the flange portion 52 on the other end side in the axial direction and one end portion in the axial direction of the outer peripheral surface 53a of the protruding portion 53 is accommodated on the inner diameter side of the tapered surface 4b of the plunger 4, the end surface of the flange portion 52 on the other end side in the axial direction can be reliably in contact with the end surface of the plunger 4 on the one end side in the axial direction, and the rod 5 can be more accurately fixed to the plunger 4.

In addition, when the coil 34 is energized to generate magnetic force between the stator 32 and the plunger 4, thus to cause the plunger 4 and the rod 5 to move to the one end side in the axial direction toward the stator 32, an end surface of the flange portion 52 of the rod 5 made of a non-magnetic material comes into contact with a bottom surface of the recessed portion 32b of the stator 32, the end surface being on the one end side in the axial direction, so that the plunger 4 is prevented from adhering to the stator 32.

As illustrated in an enlarged portion of FIG. 2, in a state where the protruding portion 53 of the rod 5 is fitted into the recessed portion 4a of the plunger 4, a space S3 is formed between a bottom portion of the recessed portion 4a and an end surface of the protruding portion 53 on the other end side in the axial direction.

Accordingly, in a state where the protruding portion 53 of the rod 5 is fitted into the recessed portion 4a of the plunger 4, the space S3 inside the recessed portion 4a of the plunger 4 and the space S1 outside the plunger 4 are allowed to communicate with each other by a communication path P1 that is partitioned off by the cutouts 53c of the rod 5, a communication path P2 that is partitioned off between the tapered surface 4b formed in the edge portion of the recessed portion 4a of the plunger 4 and the outer peripheral surface 53a of the protruding portion 53 of the rod 5, and a communication path P3 formed by a gap between the end surface of the flange portion 52 on the other end side in the axial direction and the end surface of the plunger 4 on the one end side in the axial direction. Therefore, a fluid (for example, the atmosphere) of an assembly atmosphere can be avoided from remaining in the space S3 between the recessed portion 4a and the protruding portion 53 of the rod 5, and the accuracy of operation of the plunger 4 and the rod 5 can be improved. In addition, since both the communication path P1 and the communication path P2 are provided, the size of each of the cutout 53c of the rod 5 and the tapered surface 4b of the plunger 4 can be reduced, and the strength of the rod 5 and the plunger 4 can be secured.

In addition, since the communication path P1 is partitioned off by the cutouts 53c of the rod 5, the plunger 4 can be formed in a uniform shape to reduce the size while forming an effective region of magnetic fluxes in the plunger 4 in a well-balanced manner. Further, since the two cutouts 53c are disposed at equal intervals in the circumferential direction, when the solenoid valve is immersed in the hydraulic oil in the valve housing, the hydraulic oil easily flows into the space S3 inside the recessed portion 4a through one cutout 53c, and the hydraulic oil easily flows out through the other cutout 53c, so that the fluid of the assembly atmosphere is unlikely to remain in the space S3 inside the recessed portion 4a.

In addition, since the protruding portion 53 of the rod 5 has a tapered shape due to the fitting side end portion 53b having a tapered surface being formed in the other end portion in the axial direction, the hydraulic oil or the fluid of the assembly atmosphere can smoothly move between the space S3 inside the recessed portion 4a and the space S1 outside the plunger 4.

In addition, since the flange portion 52 is provided with the side surfaces 52a and 52a formed by cutting out both the sides of the circular plate, which correspond to the cutouts 53c and 53c, the distance in the radial direction from the cutouts 53c and 53c to the space S1 outside the plunger 4 can be reduced. Therefore, the hydraulic oil or the fluid of the assembly atmosphere can smoothly move to and from the space S1 outside the plunger 4 through the communication path P3 (refer to FIG. 2) formed by the gap between the end surface of the flange portion 52 on the other end side in the axial direction and the end surface of the plunger 4 on the one end side in the axial direction.

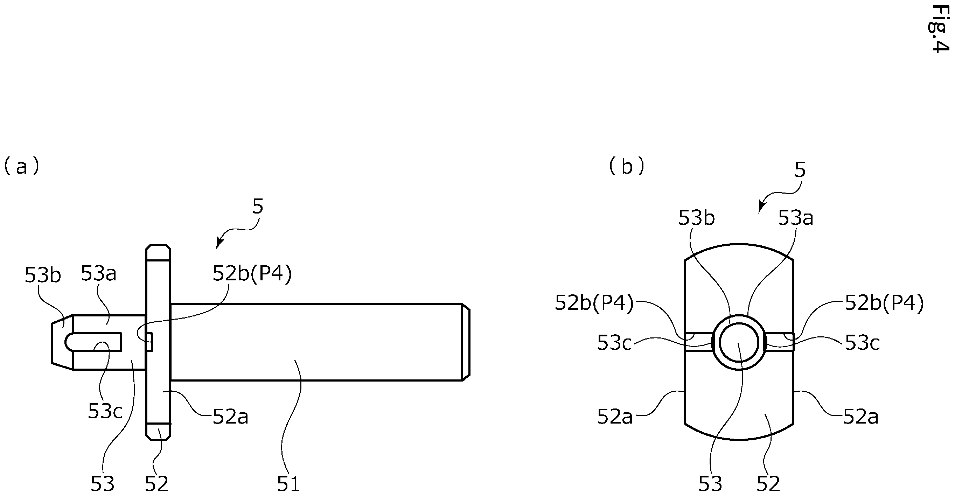

Incidentally, as a modification example of the rod 5, as illustrated in FIG. 4, a communication path P4 which is partitioned off by grooves 52b and 52b extending from the side surfaces 52a and 52a to the vicinity of the outer peripheral surface 53a of the protruding portion 53 may be formed in the end surface of the flange portion 52 on the other end side in the axial direction to correspond to the cutouts 53c and 53c. Accordingly, the cross-sectional area of the flow path can be expanded by the communication path P4 partitioned off by the grooves 52b and 52b, in addition to the communication path P3 formed by the gap between the end surface of the flange portion 52 on the other end side in the axial direction and the end surface of the plunger 4 on the one end side in the axial direction. Therefore, the hydraulic oil or the fluid of the assembly atmosphere can more smoothly move to and from the space S1 outside the plunger 4.

### {Second embodiment}

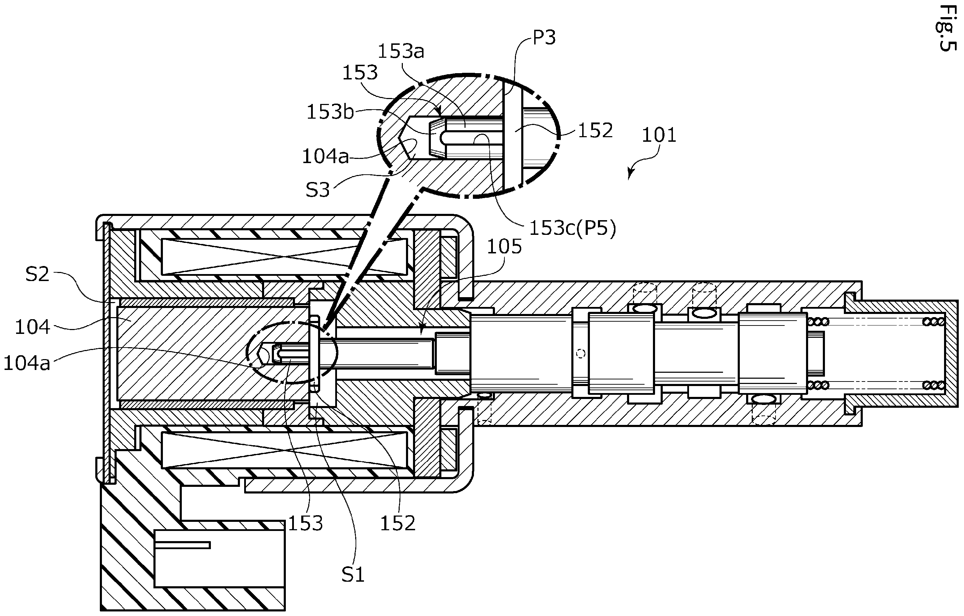

Next, a solenoid valve according to a second embodiment of the present invention will be described with reference to FIG. 5. Incidentally, the description of the same configurations and duplicated configurations as those of the first embodiment will be omitted.

In a solenoid valve 101 of the second embodiment, as illustrated in FIG. 5, an edge portion of a recessed portion 104a of a plunger 104 is formed at a right angle with respect to an end surface of the plunger 104 on the one end side in the axial direction. In addition, in a cutout 153c formed in a protruding portion 153 as an end portion of a rod 105, one end portion in the axial direction is formed in an outer peripheral surface 153a of the protruding portion 153 to extend to the position of an end surface of a flange portion 152 as a large diameter portion, the end surface being on the other end side in the axial direction, and the other end portion in the axial direction is formed to cut out a part of a tapered surface forming a fitting side end portion 153b.

Accordingly, in a state where the protruding portion 153 of the rod 105 is fitted into the recessed portion 104a of the plunger 104, the space S3 inside the recessed portion 104a of the plunger 104 and the space S1 outside the plunger 104 are allowed to communicate with each other by a communication path P5 that is partitioned off by the cutout 153c of the rod 105, and the communication path P3 formed by a gap between the end surface of the flange portion 152 on the other end side in the axial direction and the end surface of the plunger 104 on the one end side in the axial direction. Therefore, the fluid of the assembly atmosphere can be avoided from remaining in the space S3 between the recessed portion 104a and the protruding portion 153 of the rod 105, and the accuracy of operation of the plunger 104 and the rod 105 can be improved.

Incidentally, the grooves 52b and 52b (refer to FIG. 4) may be formed in the flange portion 152 of the rod 105 as in the modification example of the first embodiment.

The embodiments of the present invention have been described above with reference to the drawings; however, the specific configuration is not limited to the embodiments, and the present invention also includes changes or additions that are made without departing from the concept of the present invention.

For example, in the embodiments, the configuration where a part of the communication path is partitioned off by the cutouts formed in the protruding portion of the rod has been described; however, the present invention is not limited thereto, and a part of the communication path may be partitioned off by a groove formed in the inner peripheral surface of the recessed portion of the plunger.

In addition, a case where two cutouts formed in the protruding portion of the rod are disposed at equal intervals in the circumferential direction has been described; however, the number of the cutouts formed in the protruding portion may be freely set, and the cutouts may not be disposed at equal intervals in the circumferential direction. In addition, the bottom surface of the cutout is not limited to a flat surface shape, and may have, for example, a V shape, a round shape, or the like.

In addition, the other end portion in the axial direction of the rod may be formed in a linear shape without a tapered surface.

In addition, the shape of the flange portion as a large diameter portion of the rod may be freely configured.

In addition, the flange portion as a large diameter portion may not be formed in the rod, and in this case, for example, it is preferable that a damper member having a ring shape and made of a non-magnetic material such as resin or rubber is provided in a bottom portion of the recessed portion 32b of the stator 32.

In addition, the spaces S1 and S2 before and after the plunger may communicate with each other through communication means such as a through-hole penetrating through the plunger in the axial direction.

In addition, in the embodiments, the spool type solenoid valve using the spool in the valve body has been described; however, the present invention is not limited thereto, and may be applied to a solenoid valve using a globe valve, a gate valve, or the like.

### {REFERENCE SIGNS LIST}

- 1: Solenoid valve
- 2: Valve unit
- 3: Solenoid unit
- 4: Plunger
- 4a: Recessed portion
- 4b: Tapered surface
- 5: Rod
- 7: First tubular body
- 8: Second tubular body
- 9: Third tubular body
- 10: Lid member
- 21: Sleeve
- 22: Spool (valve body)
- 32: Stator
- 51: Base portion
- 52: Flange portion
- 52a: Side surface
- 52b: Groove
- 53: Protruding portion (end portion)
- 53a: Outer peripheral surface
- 53b: Fitting side end portion
- 53c: Cutout
- 101: Solenoid valve
- 104: Plunger
- 104a: Recessed portion
- 105: Rod
- 152: Flange portion
- 153: Protruding portion (end portion)
- 153a: Outer peripheral surface
- 153b: Fitting side end portion
- 153c: Cutout
- S1 to S3: Space
- P1 to P5: Communication path

## Claims

1. A solenoid valve in which a rod is moved by a plunger that is driven to come into contact with and separate from a stator by electromagnetic force, to cause a valve body, which opens and closes a valve, to reciprocate,
wherein a recessed portion is formed in the plunger,
an end portion of the rod disposed between the plunger and the valve body is fitted into the recessed portion, and
a communication path through which a space inside the recessed portion and a space outside the plunger communicate with each other is formed between the rod and the recessed portion.

2. The solenoid valve according to claim 1,
wherein the communication path is partitioned off by cutouts of the rod.

3. The solenoid valve according to claim 2,
wherein the cutouts of the rod are disposed at equal intervals in a circumferential direction.

4. The solenoid valve according to any one of claims 1 to 3,
wherein a fitting side end portion of the rod is formed in a tapered shape.

5. The solenoid valve according to any one of claims 1 to 4, wherein the rod has a flange portion which comes into contact with the plunger.

6. The solenoid valve according to any one of claims 1 to 5, wherein an edge portion of the recessed portion has a tapered surface inclined toward a center of the recessed portion.

7. The solenoid valve according to claim 6,
wherein the communication path is partitioned off by the tapered surface of the recessed portion and a cutout of the rod.
